(19)

**Europäisches Patentamt**
**European Patent Office**
**Office européen des brevets**

(11) **EP 4 588 021 B1**

(12) **EUROPEAN PATENT SPECIFICATION**

(45) Date of publication and mention
of the grant of the patent:
**24.06.2026  Bulletin 2026/26**

(21) Application number: **23805363.1**

(22) Date of filing: **12.10.2023**

(51) International Patent Classification (IPC):
**G06V 10/82** $^{(2022.01)}$    **G06N 3/045** $^{(2023.01)}$

(52) Cooperative Patent Classification (CPC):
**G06V 10/82; G06N 3/0455; G06N 3/0464;**
**G06N 3/084; G06N 3/09; G06T 7/11;**
G06T 2207/10016; G06T 2207/20081;
G06T 2207/20084

(86) International application number:
**PCT/US2023/076678**

(87) International publication number:
**WO 2024/081778 (18.04.2024 Gazette 2024/16)**

(54) **A GENERALIST FRAMEWORK FOR PANOPTIC SEGMENTATION OF IMAGES AND VIDEOS**

GENERALIST-RAHMEN ZUR PANOPTISCHEN SEGMENTIERUNG VON BILDERN UND VIDEOS

CADRE GÉNÉRALISTE POUR SEGMENTATION PANOPTIQUE D'IMAGES ET DE VIDÉOS

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **12.10.2022   US 202263415619 P**

(43) Date of publication of application:
**23.07.2025  Bulletin 2025/30**

(73) Proprietor: **Google LLC**
**Mountain View, CA 94043 (US)**

(72) Inventors:
• **CHEN, Ting**
**Toronto, Ontario M5H 2G4 (CA)**
• **LI, Yi**
**Toronto, Ontario M5H 2G4 (CA)**
• **SAXENA, Saurabh**
**Toronto, Ontario M5H 2G4 (CA)**
• **HINTON, Geoffrey Everest**
**Toronto, Ontario M5H 2G4 (CA)**

• **FLEET, David James**
**Toronto, Ontario M5H 2G4 (CA)**

(74) Representative: **Marks & Clerk GST**
**1 New York Street**
**Manchester M1 4HD (GB)**

(56) References cited:
• **BREMPONG EMMANUEL ASIEDU ET AL:**
**"Denoising Pretraining for Semantic**
**Segmentation", 2022 IEEE/CVF CONFERENCE**
**ON COMPUTER VISION AND PATTERN**
**RECOGNITION WORKSHOPS (CVPRW), IEEE, 19**
**June 2022 (2022-06-19), pages 4174 - 4185,**
**XP034174077, DOI: 10.1109/**
**CVPRW56347.2022.00462**
• **WANG HUIYU ET AL: "MaX-DeepLab: End-to-End**
**Panoptic Segmentation with Mask**
**Transformers", 2021 IEEE/CVF CONFERENCE**
**ON COMPUTER VISION AND PATTERN**
**RECOGNITION (CVPR), IEEE, 20 June 2021**
**(2021-06-20), pages 5459 - 5470, XP034010920,**
**DOI: 10.1109/CVPR46437.2021.00542**

**Description**

RELATED APPLICATIONS

This application claims priority to and the benefit of United States Provisional Patent Application Number 63/415,619, filed October 12, 2023. United States Provisional Patent Application Number 63/415,619.

FIELD

The present disclosure relates generally to machine learning. More particularly, the present disclosure relates to systems and methods for performing panoptic segmentation using denoising diffusion models.

Acknowledged is the following prior art:

BREMPONG EMMANUEL ASIEDU ET AL: "Denoising Pretraining for Semantic Segmentation", 2022 IEEE/CVF CONFERENCE ON COMPUTER VISION AND PATTERN RECOGNITION WORKSHOPS (CVPRW), IEEE, 19 June 2022 (2022-06-19), pages 4174-4185, XP034174077, DOI: 10.1109/CVPRW56347.2022.00462
and
WANG HUIYU ET AL: "MaX-DeepLab: End-to-End Panoptic Segmentation with Mask Transformers",2021 IEEE/CVF CONFERENCE ON COMPUTER VISION AND PATTERN RECOGNITION (CVPR), IEEE, 20 June 2021 (2021-06-20), pages 5459-5470, XP034010920,DOI: 10.1109/CVPR46437.2021.00542

BACKGROUND

Panoptic segmentation is a fundamental vision task that assigns semantic and instance labels for every pixel of an image. The semantic labels describe the class of each pixel (e.g., sky, car, dog, etc.), and the instance labels provide a unique ID for each instance in the image (e.g., to distinguish different instances of the same class). The task is a combination of semantic segmentation and instance segmentation, providing rich semantic information about the scene. As permutations of instance IDs are also valid solutions, the task requires learning of high-dimensional one-to-many mapping. As a result, state-of-the-art approaches use customized architectures and task-specific loss functions.

More particularly, while the class categories of semantic labels are often fixed *a priori,* the instance IDs assigned to objects in an image can be permuted without affecting the instances identified. For example, swapping instance IDs of two cars would not affect the outcome. Thus, a neural network trained to predict instance IDs should be able to learn a one-to-many mapping: from a single image to multiple instance ID assignments. The learning of one-to-many mappings is challenging and traditional approaches usually leverage a pipeline of multiple stages involving object detection, segmentation, merging multiple predictions. Recently, end-to-end methods have been proposed, based on a differentiable bipartite graph matching; this effectively converts a one-to-many mapping into a one-to-one mapping based on the identified matching. However, such methods still require customized architectures and sophisticated loss functions with built-in inductive bias for the panoptic segmentation task.

SUMMARY

The invention is set out in the appended claims. Aspects and advantages of embodiments of the present disclosure will be set forth in part in the following description, or can be learned from the description, or can be learned through practice of the embodiments.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

One general aspect includes a computer-implemented method for performing panoptic segmentation. The computer - implemented method also includes obtaining, by a computing system may include one or more computing devices, an input image may include a plurality of pixels. The method also includes processing, by the computing system, the input image with a denoising diffusion model to generate a panoptic segmentation mask as an output of the denoising diffusion model, where the panoptic segmentation mask provides a respective semantic identifier and a respective instance identifier for each of the plurality of pixels. The method also includes providing, by the computing system, the panoptic segmentation mask as an output. Other embodiments of this aspect include corresponding computer systems, apparatus, and computer programs recorded on one or more computer storage devices, each configured to perform the actions of the methods.

Implementations may include one or more of the following features. The computer-implemented method where the denoising diffusion model may include an image encoder and a mask decoder, where the image encoder maps the input image into a feature map, and where the mask decoder generates the panoptic segmentation mask from a noised mask conditioned on the feature map. The image encoder may include a residual neural network followed by one or more transformer encoder layers. The image encoder may include convolutions with bilateral connections and upsampling operations to merge features from different resolutions. The mask decoder may include one or more transformer layers on a top of a u-net and cross-attention layers to incorporate image features from the feature map. Processing, by the computing system, the input image with the denoising diffusion model to generate the panoptic segmentation mask as the output of the denoising diffusion model may include: processing, by the computing system, the input image with the denoising diffusion model to generate an analog bit representation of the panoptic segmentation mask as the output of the denoising diffusion model; and converting, by the computing system, the analog bit representation of the panoptic segmentation mask into a real-valued version of the panoptic segmentation mask, where the respective semantic identifier and the respective instance identifier for each of the plurality of pixels may include real values included in the real-valued version of the panoptic segmentation mask. The analog bit representation of the panoptic segmentation mask is generated according to a scaling factor, and where the scaling factor equals 0.1. The denoising diffusion model has been trained using a softmax cross entropy loss applied over logits of the denoising diffusion model. The denoising diffusion model has been trained using a weighted loss function that assigns a larger weight to mask tokens that have fewer instances. The input image may include an input image frame from a video; and processing, by the computing system, the input image with the denoising diffusion model may include processing, by the computing system with the denoising diffusion model, the input image and one or more preceding panoptic segmentation masks generated for one or more preceding image frames that precede the input image frame in the video. The one or more preceding panoptic segmentation masks generated for the one or more preceding image frames may include a plurality of preceding panoptic segmentation masks generated for a plurality of preceding image frames. The denoising diffusion model may include an image encoder and a mask decoder, where the image encoder maps the input image frame into a feature map, and where the mask decoder generates the panoptic segmentation mask from a noised mask conditioned on the feature map and the one or more preceding panoptic segmentation masks. Implementations of the described techniques may include hardware, a method or process, or computer software on a computer-accessible medium.

One general aspect includes one or more non-transitory computer-readable media that collectively store instructions for performing panoptic segmentation. The one or more non - transitory computer - readable media also includes instructions for obtaining, by the computing system, an input image may include a plurality of pixels. The media also includes instructions for processing, by the computing system, the input image with a denoising diffusion model to generate a panoptic segmentation mask as an output of the denoising diffusion model, where the panoptic segmentation mask provides a respective semantic identifier and a respective instance identifier for each of the plurality of pixels. The media also includes instructions for providing, by the computing system, the panoptic segmentation mask as an output. Other embodiments of this aspect include corresponding computer systems, apparatus, and computer programs recorded on one or more computer storage devices, each configured to perform the actions of the methods.

Implementations may include one or more of the following features. The one or more non-transitory computer-readable media where the denoising diffusion model may include an image encoder and a mask decoder, where the image encoder maps the input image into a feature map, and where the mask decoder generates the panoptic segmentation mask from a noised mask conditioned on the feature map. Processing, by the computing system, the input image with the denoising diffusion model to generate the panoptic segmentation mask as the output of the denoising diffusion model may include: processing, by the computing system, the input image with the denoising diffusion model to generate an analog bit representation of the panoptic segmentation mask as the output of the denoising diffusion model; and converting, by the computing system, the analog bit representation of the panoptic segmentation mask into a real-valued version of the panoptic segmentation mask, where the respective semantic identifier and the respective instance identifier for each of the plurality of pixels may include real values included in the real-valued version of the panoptic segmentation mask. The input image may include an input image frame from a video; and processing, by the computing system, the input image with the denoising diffusion model may include processing, by the computing system with the denoising diffusion model, the input image and one or more preceding panoptic segmentation masks generated for one or more preceding image frames that precede the input image frame in the video. The one or more non-transitory computer-readable media further store the denoising diffusion model. Implementations of the described techniques may include hardware, a method or process, or computer software on a computer-accessible medium.

One general aspect includes a computing system for training a denoising diffusion model to perform panoptic segmentation. The computing system also includes instructions for obtaining, by the computing system, a training input image and a ground truth panoptic segmentation mask. The system also includes instructions for processing, by the computing system, the training input image with the denoising diffusion model to generate a predicted panoptic segmentation mask as an output of the denoising diffusion model, where the predicted panoptic segmentation mask provides a respective semantic identifier and a respective instance identifier for each of the plurality of pixels. The system also includes instructions for evaluating, by the computing system, a loss function that compares the predicted panoptic segmentation mask to the ground truth panoptic segmentation mask. The system also includes instructions for modifying, by the computing system, one or more parameter values of or more parameters of the denoising diffusion model based on the loss function. Other embodiments of this aspect include corresponding computer systems, apparatus, and computer programs recorded on one or more computer storage devices, each configured to perform the actions of the methods.

Implementations may include one or more of the following features. The computing system where the loss function may include a softmax cross entropy loss applied over logits of the denoising diffusion model. The loss function may include a weighted loss function that assigns a larger weight to mask tokens that have fewer instances. Implementations of the described techniques may include hardware, a method or process, or computer software on a computer-accessible medium.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

BRIEF DESCRIPTION OF THE DRAWINGS

Detailed discussion of embodiments directed to one of ordinary skill in the art is set forth in the specification, which makes reference to the appended figures, in which:

Figure 1 depicts a block diagram of an example approach for performing panoptic segmentation on an input image using a denoising diffusion model according to example embodiments of the present disclosure.
Figure 2 depicts a block diagram of an example denoising diffusion model architecture for performing panoptic segmentation on an input image according to example embodiments of the present disclosure.
Figure 3 depicts a block diagram of an example approach for performing panoptic segmentation on a sequence of video frames using a denoising diffusion model according to example embodiments of the present disclosure.
Figure 4 depicts a block diagram of an example denoising diffusion model architecture for performing panoptic segmentation on a sequence of video frames according to example embodiments of the present disclosure.
Figure 5 depicts a block diagram of an example approach for training a diffusion model to perform panoptic segmentation according to example embodiments of the present disclosure.
Figure 6 depicts a flow chart diagram of an example method to perform panoptic segmentation inference according to example embodiments of the present disclosure.
Figure 7 depicts a flow chart diagram of an example method to train a diffusion model to perform panoptic segmentation according to example embodiments of the present disclosure.
Figure 8A depicts a block diagram of an example computing system according to example embodiments of the present disclosure.
Figure 8B depicts a block diagram of an example computing device according to example embodiments of the present disclosure.
Figure 8C depicts a block diagram of an example computing device according to example embodiments of the present disclosure.

Reference numerals that are repeated across plural figures are intended to identify the same features in various implementations.

DETAILED DESCRIPTION

The present disclosure provides systems and methods for performing panoptic segmentation of images and videos using a denoising diffusion model. Panoptic segmentation is a computer vision task that assigns semantic and instance labels for every pixel of an image. The semantic labels describe the class of each pixel (e.g., sky, car, dog, etc.), and the instance labels provide a unique ID for each instance in the image. This task is challenging due to the high-dimensional one-to-many mapping required, and traditional approaches often involve complex pipelines involving object detection, segmentation, and merging multiple predictions.

In the present disclosure, the panoptic segmentation task is formulated as a conditional discrete data generation problem. This is achieved by learning a generative model for panoptic masks, for example treated as an array of discrete tokens, conditioned on an input image. The generative model can also be applied to video data by including predictions from past frames as an additional conditioning signal. This enables the model to learn to track and segment objects automatically across video frames.

In particular, in some example implementations of the present disclosure, the generative model employed to predict the panoptic segmentation mask can be a denoising diffusion model. For example, the denoising diffusion model used in the present disclosure can include an image encoder and a mask decoder. The image encoder can map the raw pixel data from an input image into high-level feature representations. The mask decoder can then generate the panoptic mask from a noised mask conditioned on these image features. For example, given an input image, the model can start with random noise as an initial set of analog bits, and gradually refines its estimates to be closer to that of good panoptic masks. In some implementations, the image encoder is only run once, so the cost of multiple iterations depends on the decoder alone.

Another aspect of the present disclosure relates to the use of analog bits to represent discrete tokens in the panoptic mask. For example, the denoising diffusion model can generate an analog bit representation of the panoptic mask, which can then be converted into a real-valued version of the panoptic mask. This allows the semantic identifier and the instance identifier for each pixel to be represented using real values while the model is able to operate in a space represented using analog bits.

Another aspect of the present disclosure is directed to training of the denoising diffusion model. In some implementations, the model can be trained using a softmax cross entropy loss applied over the logits of the model. This allows the model to directly model the underlying distribution over a set of base categories, and use a weighted average of the base categories to obtain the analog bits. Additionally or alternatively, in some implementations, the model can also be trained using a weighted loss function that assigns a larger weight to mask tokens associated with small objects. This can help to improve the segmentation of small instances.

The systems and methods described herein can also be extended to videos. For video panoptic segmentation, the model can generate panoptic masks conditioned on the image and one or more past mask predictions for preceding image frames of the video. This allows the model to track and segment instances across frames without requiring explicit instance matching through time.

Thus, the present disclosure provides a generalized approach to panoptic segmentation of images and videos. The use of a denoising diffusion model allows for the simultaneous modeling of a large number of discrete tokens, which is difficult with other existing generative segmentation models. This approach can potentially be further improved by optimizing the architecture, modeling choices, and training procedure as described herein.

The systems and methods of the present disclosure provide a number of technical effects and benefits. As one example, the present disclosure describes techniques for performing panoptic segmentation, which is a fundamental and complex vision task that assigns semantic and instance labels for every pixel of an image. The disclosed technology addresses this challenge by formulating panoptic segmentation as a discrete data generation problem, for example using a denoising diffusion model to generate a panoptic segmentation mask that provides a respective semantic identifier and a respective instance identifier for each pixel of an image.

This approach offers several advantages over prior techniques. As opposed to prior approach which use complex, multi-stage systems, the proposed approach simplifies the complex process of panoptic segmentation by using a more generalized framework. In particular, generative modeling for panoptic segmentation is very challenging as the panoptic masks are discrete/categorical and can be very large. For example, to generate a $512 \times 1024$ panoptic mask, the model has to produce more than 1M discrete tokens (of semantic and instance labels). This is expensive for auto-regressive models as they are inherently sequential, scaling poorly with the size of data input. Therefore, approaches which leverage auto-regressive models for performing panoptic segmentation are highly computationally consumptive, as a forward computation of the decoder is executed to predict each token. In contrast, diffusion models as described herein are better at handling high dimension data and do not operate in an inherently sequential manner, instead working to simultaneously predict all of the tokens of the mask. Therefore, the use of diffusion models for panoptic segmentation as described herein represents a significant savings of computational resources such as processor cycles, memory usage, network bandwidth, etc.

The disclosed technology can be applied in various fields or applications. As one example, in autonomous driving, it can help vehicles recognize and distinguish between different objects and instances, such as pedestrians, other cars, and street signs, in real-time, thereby improving the safety of self-driving cars. As another example, in the field of medical imaging, the technology can help segment different tissues, cells, or anomalies, aiding in faster and more accurate diagnoses. Additionally, this technology can be used in augmented reality applications to understand and manipulate the digital representation of the real world. As yet another example, in the field of robotics, it may help robots better understand and navigate their surroundings. Overall, the application of this technology can potentially improve the accuracy and efficiency of any task involving image or video analysis.

With reference now to the Figures, example embodiments of the present disclosure will be discussed in further detail.

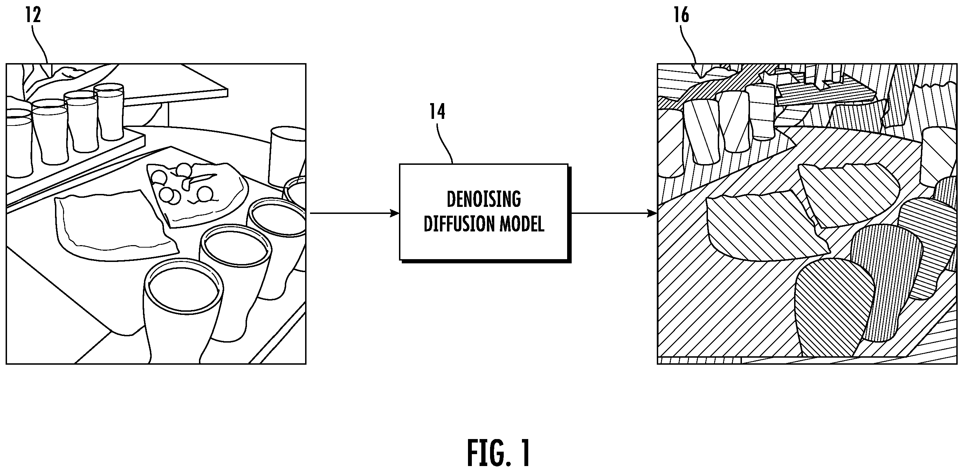

Referring now to Figure 1, an exemplary process for performing panoptic segmentation on an input image using a denoising diffusion model in accordance with embodiments of the present disclosure is depicted. An input image 12 is obtained by a computing system comprising one or more computing devices. The input image 12 comprises a plurality of pixels and may be any digital image or frame of a video sequence, for instance, a frame from a 1080p or 4K video, or images captured from digital cameras or mobile devices.

The input image 12 could also be provided in various formats such as JPEG, PNG, BMP, or RAW. The input image 12 can be a color image or a grayscale image. The resolution of the input image 12 can vary. It can be a high-resolution image, which provides more detailed information and could potentially improve the accuracy of the panoptic segmentation. Alternatively, it can be a low-resolution image, which requires less computational resources to process. The computing system can also adjust the resolution of the input image 12, for example, by downscaling a high-resolution image or upscaling a low-resolution image.

In some implementations, the input image 12 can also be preprocessed before being fed into the denoising diffusion model 14. The preprocessing can include operations such as noise reduction, contrast enhancement, and normalization. These operations can help to improve the quality of the input image 12 and make the panoptic segmentation task easier.

The input image 12 is processed by a denoising diffusion model 14. The denoising diffusion model 14 is a type of generative model that is particularly well-suited to handle high-dimensional data. For instance, the model can handle images with thousands or even millions of pixels.

The denoising diffusion model 14 can be implemented in various computing systems, including servers, personal computers, and mobile devices. The model 14 can also be implemented in different programming languages, such as Python, Java, or C++. The specific implementation details can depend on the requirements of the panoptic segmentation task and the constraints of the computing system.

The output of the denoising diffusion model 14 is a panoptic segmentation mask 16. The panoptic segmentation mask 16 provides a respective semantic identifier and a respective instance identifier for each pixel in the input image 12. For example, the semantic identifier might classify pixels as belonging to categories such as "sky", "car", "dog", etc., and the instance identifier assigns a unique ID for each instance in the image, enabling differentiation between multiple instances of the same class.

In some implementations, the semantic identifier can be assigned based on a predefined set of classes. For example, for a panoptic segmentation task involving outdoor scenes, the set of classes can include "sky", "building", "car", "pedestrian", "tree", and so on. Each class in the set can be assigned a unique semantic identifier, which is then used to label the pixels in the mask 16. The set of classes can be defined by the user, or it can be learned automatically by the denoising diffusion model. The semantic identifier can be represented in various formats. For example, it can be represented as a binary code, a one-hot vector, or a probability distribution over the set of classes. The specific representation can depend on the capabilities of the denoising diffusion model 14 and the requirements of the panoptic segmentation task.

The instance identifier provides a unique ID for each instance in the image. For example, if an image contains multiple cars, each car would be assigned a unique instance identifier. This identifier can be represented in various forms such as an integer or a string, depending on the specific requirements of the panoptic segmentation task. The range of the integer can be determined based on the maximum number of instances that the denoising diffusion model is expected to handle. For example, if the model is expected to handle up to 1000 instances, the range of the integer can be from 0 to 999. The integer can also be represented in various number systems, such as the binary system, the decimal system, or the hexadecimal system.

The panoptic segmentation mask 16 can be generated in various resolutions, depending on the resolution of the input image and the requirements of the panoptic segmentation task. A high-resolution mask provides more detailed information and could potentially improve the accuracy of the segmentation. On the other hand, a low-resolution mask requires less computational resources to generate and process. The resolution of the panoptic segmentation mask 16 can be adjusted by the computing system, for example, by downscaling a high-resolution mask or upscaling a low-resolution mask.

The panoptic segmentation mask 16 can be provided as output, for use in various applications such as object detection, instance segmentation, and image or video analysis. The output could be used, for instance, in autonomous driving systems, video surveillance systems, or image editing software. The panoptic segmentation mask 16 can be provided as an output in various formats, such as a binary file, a text file, or an image file. The panoptic segmentation mask 16 can also be displayed on a display device or stored in a storage device.

During inference, the network generates target data in parallel, for example using far fewer iterations than the number of pixels, which could significantly improve computational efficiency.

In some embodiments, the panoptic segmentation mask 16 is also used to condition the generation of panoptic masks for subsequent frames in a video sequence. This allows the model to track and segment instances across frames without requiring explicit instance matching through time, thereby enabling smooth and consistent instance tracking in video data.

More particularly, still referring to Figure 1, the problem of generating panoptic segmentation masks can be formulated as follows. The panoptic segmentation mask 16 can be expressed with two channels, $m \in Z^{H \times W \times 2}$. The first channel represents the category or class label, and the second channel represents the instance ID.

Given that instance IDs can be permuted without changing the underlying instances, some example implementations can randomly assign integers in [0, $K$] to instances every time an image is sampled during training, where K is the maximum number of instances allowed in any image and 0 denotes the null label. The task of solving the panoptic segmentation problem involves learning an image-conditional panoptic mask generation model, for example by maximizing $\Sigma_i log P(m_i|x_i)$ , where $m_i$ is a random categorical variable corresponding to the panoptic mask for image $x_i$ in the training data. Considering that panoptic masks may consist of hundreds of thousands or even millions of discrete tokens, generative modeling can be very challenging, particularly for autoregressive models.

As a solution to the aforementioned problem, some example implementations can leverage diffusion models with analog bits. Unlike autoregressive generative models, diffusion models have been shown to be more effective with high dimension data. Training a diffusion model can include learning a denoising network. During the inference phase, the network generates target data in parallel, using notably fewer iterations than the number of pixels. Essentially, diffusion models learn a series of state transitions to transform noise $\varepsilon$ from a known noise distribution into a data sample $x_0$ from the data distribution $p(x)$.

In order to learn this mapping, in some implementations, a forward transition from data $x_0$ to a noisy sample $x_t$ can be defined as follows: $x_t = \sqrt{\gamma(t)} x_0 + \sqrt{1 - \gamma(t)} \varepsilon$, where $\varepsilon$ is drawn from standard normal density, $t$ is from uniform density on [0,1], and $\gamma(t)$ is a monotonically decreasing function from 1 to 0. During training, a neural network $f(x_t, t)$ is learned to predict $x_0$ (or $\varepsilon$) from $x_t$, usually formulated as a denoising task with an $L_2$ loss:

$$L_{x_0} = E_{t \sim U(0,T), \varepsilon \sim N(0,1), x_t} \parallel f(x_t, t) - x_0 \parallel^2.$$

To generate samples from a learned model, the model can begin with a sample of noise, $x_T$, and then follow a series of (reverse) state transitions $x_T \rightarrow x_{T-\Delta} \rightarrow \cdots \rightarrow x_0$ by iteratively applying the denoising function $f$ with appropriate transition rules.

Conventional diffusion models assume continuous data and Gaussian noise, and are not directly applicable to discrete data. To model discrete data, an approach based on analog bits first converts integers representing discrete tokens into bit strings, the bits of which are then cast as real numbers (also known as analog bits) to which continuous diffusion models can be applied. To draw samples, the approach based on analog bits uses a conventional sampler from continuous diffusion, after which a final quantization step (e.g., simple thresholding) is used to obtain the categorical variables from the generated analog bits. An example of this approach can generally correspond to Figure 1 where the denoising diffusion model 14 generates a panoptic segmentation mask 16 based on this principle.

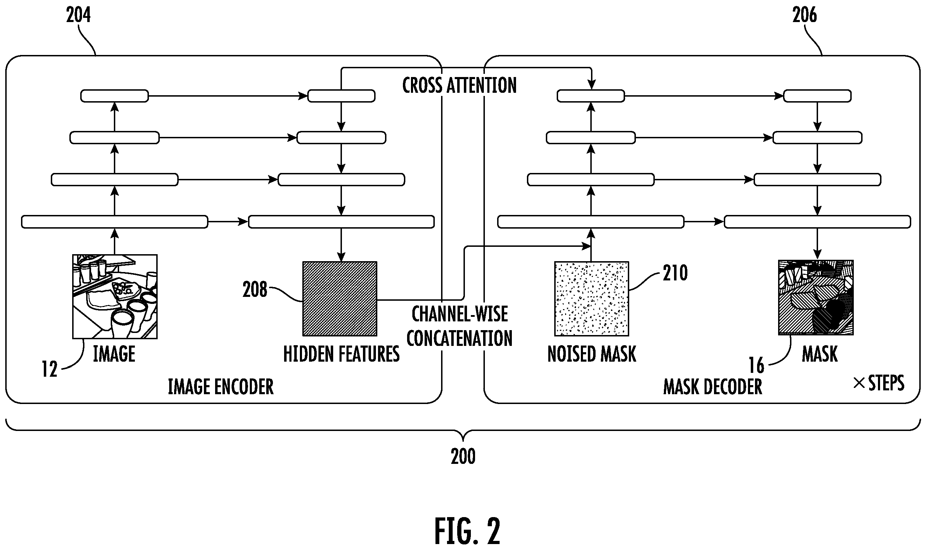

Figure 2 provides an illustration of an exemplary denoising diffusion model architecture 200 purposed for conducting panoptic segmentation on an input image 12. The architecture 200 includes an image encoder 204 and a mask decoder 206. The input image 12 is an initial data point for the denoising diffusion model 200 and can, for example, have dimensions expressed as $x \in R^{H \times W \times 3}$.

The first step in the process involves the image encoder 204, which can be a type of neural network that transforms raw pixel data into latent representation vectors, thereby creating a feature map 208. For example, the image encoder 204 can operate to convert the raw pixel data from the input image 12 into a high-level feature map 208 with dimensions expressed, for example, as $R^{H' \times W' \times d}$, where $H'$ and $W'$ denote the height and width of the panoptic mask 16. The size of the panoptic mask 16 can be either equal to, larger than, or smaller than the original input image 12. The feature map 208 can be designed to maintain adequate resolution and incorporate features at different scales. In some implementations, This feature map 208 can be generated by the encoder 204 using a series of convolutions with bilateral connections and upsampling operations to merge features from varying resolutions. For example, the encoder 204 can be a ResNet model followed by transformer encoder layers.

In particular, one possible implementation of the image encoder 204 can include a residual neural network followed by one or more transformer encoder layers. The residual neural network can be used to extract high-level features from the input image, while the transformer encoder layers can be used to further process these features. The specific architecture of the residual neural network and the transformer encoder layers can vary. For example, the residual neural network can include different numbers of layers, different types of activation functions, and different types of pooling operations. The transformer encoder layers can also include different numbers of layers, different types of attention mechanisms, and different types of normalization operations.

In some implementations, the image encoder 204 can also include convolutions with bilateral connections and upsampling operations to merge features from different resolutions. This allows the image encoder 204 to capture information at different scales, which can be beneficial for the panoptic segmentation task. The convolutions can be implemented with different types of convolutional layers, such as standard convolutional layers, dilated convolutional layers, or depthwise separable convolutional layers. The bilateral connections can be implemented with different types of connection patterns, such as skip connections, residual connections, or dense connections. The upsampling operations can be implemented with different types of upsampling methods, such as nearest neighbor upsampling, bilinear upsampling, or transposed convolutional upsampling.

Referring still to Figure 2, next, the mask decoder 206 utilizes the feature map 208, in conjunction with a noised mask 210, as its input. During the inference phase, the mask decoder 206 iteratively refines the panoptic mask, with its operations being conditioned on the image features. More specifically, the mask decoder 206 can take as its input the concatenated image feature map from the encoder and a noisy mask (e.g., either randomly initialized or from the previous iteration), and generates a refined prediction of the mask 16.

A distinguishing feature of some example implementations of the mask decoder 206 in comparison with the standard U-Net architecture typically used in image generation and image-to-image translation tasks is the deployment of transformer decoder layers on top of the U-Net. These layers can include cross-attention mechanisms that incorporate the encoded image features 208 (e.g., before upsampling operations are carried out). This unique design aids in the effective refinement of the panoptic mask 16, thereby contributing to the overall performance of the denoising diffusion model 200.

Thus, one possible implementation of the mask decoder 206 can include one or more transformer layers on top of a U-Net architecture. The U-Net architecture is a type of convolutional neural network that is particularly effective for image segmentation tasks. It is composed of a downsampling path and an upsampling path, which allows it to capture context and spatial information. The transformer layers, on the other hand, can model long-range dependencies in the data and handle variable-sized inputs, making them particularly useful for the panoptic segmentation task.

In some implementations, the mask decoder 206 can also include cross-attention layers to incorporate the encoded image features 208. Cross-attention is a mechanism that allows the model to focus on different parts of the input when generating each part of the output. This can help the mask decoder 206 to generate more accurate panoptic segmentation masks by taking into account the relevant image features.

The final output of the denoising diffusion model 200 is the panoptic segmentation mask 16, which assigns a distinct semantic identifier and instance identifier for each of the pixels present in the input image 12. This produced mask 16 is then outputted, signifying the completion of the panoptic segmentation process.

The denoising diffusion model 200 is especially proficient at handling high-dimension data, and it signifies a substantial advancement over traditional autoregressive generative models. This model 200 is capable of modeling a large count of discrete tokens, making it well-suited for the complex work of panoptic segmentation. The architecture of the model, notably the segregation of the image encoder 204 and the mask decoder 206, enables efficient processing and iterative refinement of the panoptic mask.

Specifically, as depicted in Figure 2, the architecture of the denoising diffusion model 200 is purposely delineated into two main sections: an image encoder 204 and a mask decoder 206. This separation is significant because the process of diffusion model sampling is iterative, meaning that the forward pass of the network is typically executed multiple times during inference. The image encoder 204 is responsible for transforming the raw pixel data from the input image 12 into high-level representation vectors, which may be performed only once, while the mask decoder 206 iteratively refines the panoptic mask 16 based on these image features 208.

One example inference algorithm is as follows:

```
def infer(images, steps=10, td=1.0):
    """images: [b, h, w, 3]. """

    # Encode image features.
```

$$h = \text{pixel\_encoder}(images)$$

```
    m_t = normal(mean=0, std=1) # same shape as m_bits.
    for step in range(steps):

        # Get time for current and next states.
```

$$t\_now = 1 - step / steps$$

$$t\_next = \max(1 - (step + 1 + td) / steps, 0)$$

```
        # Predict analog bits m_0 from m_t.
```

$$\_, m\_pred = \text{mask\_decoder}(m\_t, h, t\_now)$$

```
# Estimate m at t_next.
```

$$m\_t = ddim\_step(m\_t, m\_pred, t\_now, t\_next)$$

```
# Analog bits to masks.
```

$$masks = bit2int(m\_pred > 0)$$

```
return masks
```

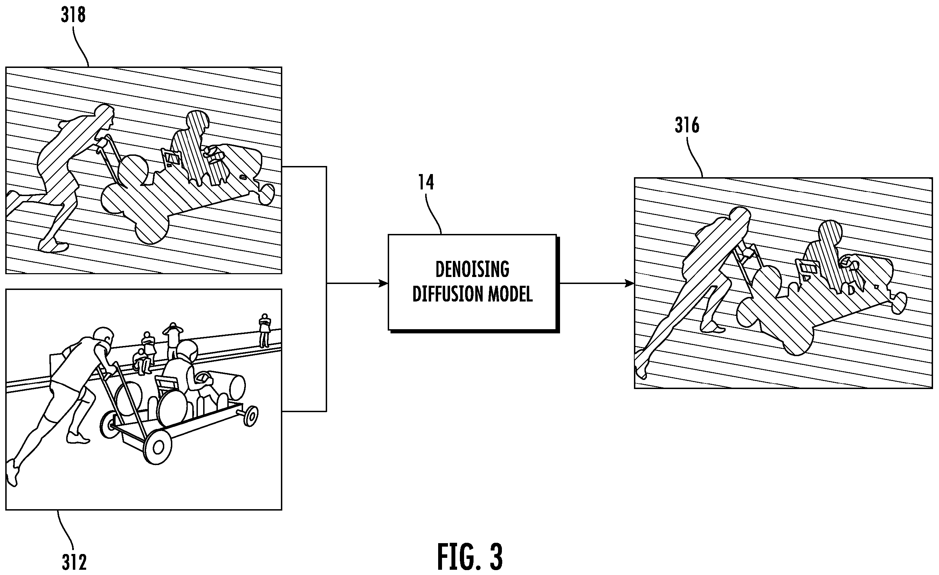

Figure 3 of the present application illustrates an example approach for performing panoptic segmentation on a sequence of video frames using a denoising diffusion model according to example embodiments of the present disclosure. In the depicted embodiment, an input image 312 is obtained from a sequence of video frames, which could be captured by a camera, retrieved from a digital video file, or sourced from a video streaming service, for example.

The input image 312 is processed by a denoising diffusion model 14. In the context of video panoptic segmentation, as shown in Figure 3, the model can generate a panoptic segmentation mask 316 conditioned not only on the input image 312 but also on a preceding panoptic segmentation mask 318 generated for a preceding image frame from the video. This preceding image frame could be the immediately prior frame in the sequence, or it could be a frame from a set number of steps earlier, for instance. This approach allows the model to track and segment instances across video frames without needing explicit instance matching through time, which could be achieved by complex object tracking algorithms or optical flow methods.

Thus, Figure 3 illustrates an example extension to videos. In particular, the proposed image-conditional panoptic mask modeling with $p(m|x)$ is directly applicable for video panoptic segmentation by considering 3D masks (e.g., with an extra time dimension) given a video. To adapt for online/streaming video settings, as illustrated in Figure 3, the model 14 can model $p(m_t|x_t, m_{t-1}, m_{t-k})$, thereby generating panoptic masks conditioned on the image and past mask predictions. This change can be easily implemented by concatenating the past panoptic mask(s) 314 ($m_{t-1}, m_{t-k}$) with existing noisy masks, as demonstrated in Figure 3. Other than this minor change, the model can remain same as that above, which is simple and allows one to fine-tune an image panoptic model for video.

Having an iterative refinement procedure also makes the framework convenient to adapt in a streaming video setting where there are strong dependencies across adjacent frames. In the video setting, similar results may be achieved with fewer inference steps when there are relatively small changes in video frames. Thus, some example implementations can set refinement steps adaptively across video frames.

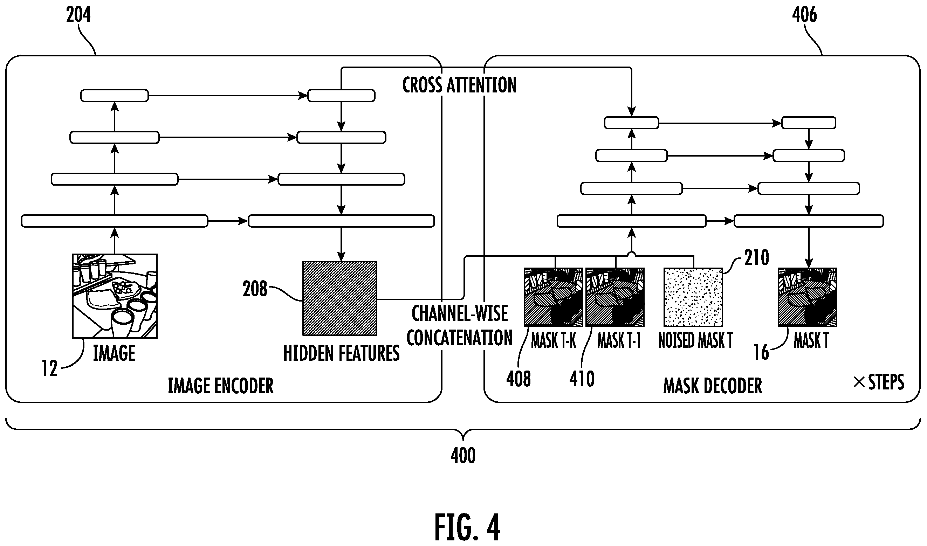

Referring now to Figure 4, the diagram exemplifies a denoising diffusion model architecture 400 for implementing panoptic segmentation on a sequence of video frames according to example embodiments of the present disclosure. The denoising diffusion model 400, as depicted, encompasses an image encoder 204 and a mask decoder 406.

The image encoder 204 can operate to transform the raw pixel data derived from an input image 12 into high-level feature representations, conceptualized as a feature map 208. For instance, the image encoder 204 may employ convolutional neural networks or other such neural networks for this transformation process. Further, additional components such as pooling layers and fully connected layers could be incorporated for more advanced feature extraction.

The mask decoder 406 takes generates the panoptic mask 16 from a noised mask 210. This generation process can be conditioned on the image features 208 derived from the image encoder 204 and also one or more preceding panoptic segmentation masks such as masks 408 and 410. In some implementations, the noised mask 210, which could be initialized as random noise or any other suitable initialization strategy, serves as the initial analog bits. The model 400 refines these initial estimates systematically to get closer to the optimal panoptic masks. In some implementations, the image encoder 204 is executed only once, and thus, the computational cost of multiple iterations is primarily dependent on the mask decoder 406.

Thus, Figure 4 demonstrates the incorporation of preceding panoptic segmentation masks 408 and 410 in the video frame processing sequence. For video panoptic segmentation, the model 400 can formulate panoptic masks conditioned not only on the input image 12 but also on one or more past mask predictions corresponding to preceding image frames of the video. This unique feature enables the model 400 to track and segment instances across frames without the need for explicit instance matching over time.

Finally, the output of the denoising diffusion model 400 is the panoptic segmentation mask 16, which provides a respective semantic identifier and a respective instance identifier for each pixel of the input image 12. The generation of this mask 16 symbolizes the completion of the panoptic segmentation process. The panoptic segmentation mask 16 can be subsequently utilized for various applications such as object recognition, video analytics, and autonomous navigation among others.

In the realm of video panoptic segmentation, the denoising diffusion model 400 can be viewed as a conditional discrete data generation model that incorporates predictions from prior frames as an additional conditioning signal. This functionality allows the model 400 to learn to track and segment objects automatically across video frames. This approach offers several advantages over prior methods, particularly in handling high dimension data and providing a significant savings of computational resources.

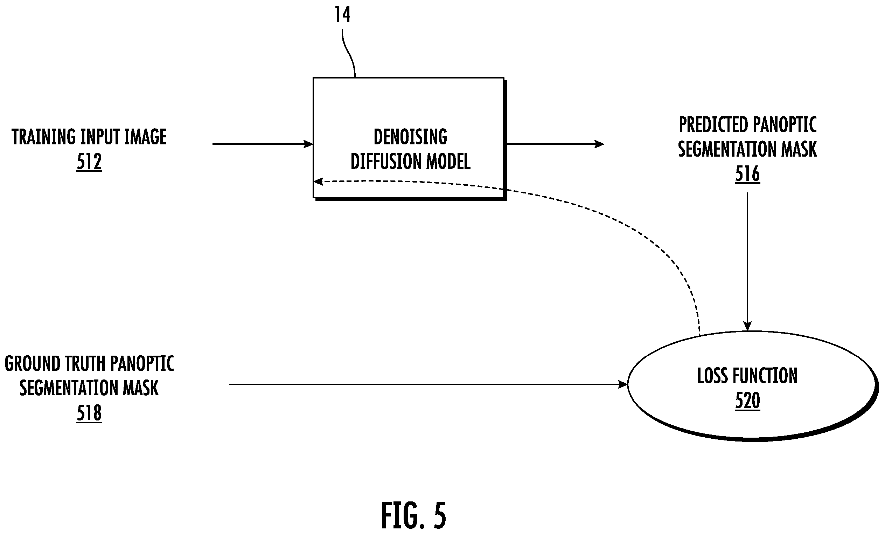

Referring to Figure 5, an exemplary method for training a denoising diffusion model to perform panoptic segmentation is illustrated. The initial phase of the training procedure involves acquiring a training input image 512 and a ground truth panoptic segmentation mask 518. The training input image 512, which can be sourced from a variety of databases such as ImageNet, MS-COCO, or Cityscapes for instance, is processed by the denoising diffusion model 14 to construct a predicted panoptic segmentation mask 516.

The predicted panoptic segmentation mask 516, which serves as the model's output, is then compared to the ground truth panoptic segmentation mask 518 using a loss function 520. As one example, he loss function 520 can be a softmax cross entropy loss, implemented over the logits (e.g., unnormalized outputs) of the denoising diffusion model 14. In particular, unlike conventional diffusion models which use an $L_2$ denoising loss, softmax cross entropy yields better performance in panoptic segmentation tasks. The softmax cross entropy loss allows the network to directly model the underlying distribution over the base categories and use a weighted average to obtain the analog bits.

In addition or alternatively, the loss function 520 can be a weighted loss function that assigns a larger weight to mask tokens associated with small objects, thus providing bias towards improved segmentation of smaller instances. For example, this approach can assign a higher weight to mask tokens associated with small objects. The loss weighting can be achieved by calculating the pixel count for each instance and assigning a weight inversely proportional to the pixel count raised to the power of a tunable parameter 'p'. This approach ensures that the model gives approximately equal importance to all objects in the image, regardless of their size.

Based on the evaluation of the loss function 520, the denoising diffusion model 14 is updated. This update can include adjusting the model's weights and biases, and refining the model's parameters via techniques such as backpropagation and gradient descent. This iterative process of training permits the denoising diffusion model 14 to progressively enhance its capacity to perform panoptic segmentation tasks.

One example training algorithm is as follows:

```
def train_loss(images, masks):

    """images: [b, h, w, 3], masks: [b, h', w', 2]."""

    # Encode image features.
```

$$h = \text{pixel\_encoder(images)}$$

```
    # Discrete masks to analog bits.
```

$$m\_bits = \text{int2bit(masks).astype(float)}$$

$$m\_bits = (m\_bits * 2 - 1) * scale$$

```
    # Corrupt analog bits.
```

$$t = \text{uniform}(0, 1) \qquad \text{\# scalar.}$$

$$eps = \text{normal(mean=0, std=1)} \quad \text{\# same shape as m\_bits.}$$

$$m\_crpt = \text{sqrt(gamma(t))} * m\_bits + \text{sqrt(1 - gamma(t))} * eps$$

```
    # Predict and compute loss.
```

$$m\_logits, \_ = \text{mask\_decoder(m\_crpt, h, t)}$$

$$loss = \text{cross\_entropy(m\_logits, masks)}$$

return loss.mean()

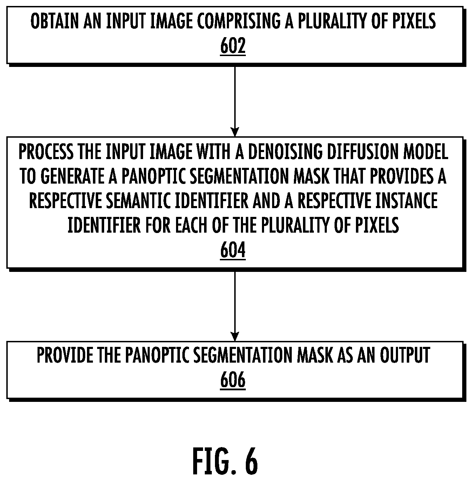

Referring to Figure 6, the flow chart presents an illustrative method for implementing panoptic segmentation inference as per several embodiments of the current disclosure. This method initiates at step 602 with a computing system, potentially made up of several computing devices, obtaining an input image that consists of numerous pixels. This input image could be a stand-alone photograph or a single frame extracted from a video sequence.

Step 604 details how the computing system processes the input image using a denoising diffusion model, which is designed to generate a panoptic segmentation mask. In some implementations, the denoising diffusion model, which is trained to carry out a number of state transitions, efficiently transforms random noise from a known noise distribution into a data sample that matches the data distribution. This transformation can be accomplished through the application of a denoising function following specific transition rules.

The resultant panoptic segmentation mask assigns a unique semantic identifier and instance identifier to each pixel in the input image. The semantic identifier classifies each pixel while the instance identifier provides a unique ID for every instance in the image, making it possible to differentiate various instances of the same class.

In some implementations, to create the panoptic segmentation mask, the denoising diffusion model processes the input image to produce an analog bit representation of the panoptic segmentation mask. Subsequently, this analog bit representation is converted into a real-valued version of the panoptic segmentation mask, wherein the semantic identifier and the instance identifier for each pixel are represented as real values in the mask.

The method concludes at step 606, where the computing system delivers the panoptic segmentation mask as an output. This output could potentially be applied to various purposes such as image recognition, object detection, or video analysis.

One possible implementation of this step 606 can involve displaying the panoptic segmentation mask on a display device connected to or integrated with the computing system. The display device can be a monitor, a projector, a television screen, or a virtual reality headset. The panoptic segmentation mask can be displayed as an image, where each pixel's color or intensity corresponds to its semantic identifier or instance identifier. This allows the user to visually inspect the result of the panoptic segmentation.

Another possible implementation of this step 606 can involve storing the panoptic segmentation mask in a storage device connected to or integrated with the computing system. The storage device can be a hard disk, a solid-state drive, a USB flash drive, a memory card, or a cloud storage service. The panoptic segmentation mask can be stored as a file in various formats, such as a binary file, a text file, or an image file.

Another possible implementation of this step 606 can involve involve transmitting the panoptic segmentation mask to another system via a communication network. The other system can be a server, a client, a peer, or a network service. The communication network can be a local area network, a wide area network, the internet, or a cellular network. The panoptic segmentation mask can be transmitted as a stream of data packets, which are then reassembled, decoded, and converted into the panoptic segmentation mask by the other system. This allows the panoptic segmentation mask to be used in a distributed computing environment, or to be incorporated into a larger data processing pipeline.

In some implementations, the denoising diffusion model utilized in this method could be trained using a softmax cross entropy loss applied over the logits of the model, and/or through a weighted loss function that assigns a greater weight to mask tokens associated with smaller objects. When this model is applied to a video sequence, the denoising diffusion model may create panoptic masks conditioned on the image and one or more past mask predictions for preceding image frames of the video.

This method presents several advantages over earlier methods for panoptic segmentation. Specifically, the use of a denoising diffusion model allows for modeling a large number of discrete tokens, a task that might be challenging or even impossible with other existing generative segmentation models. Moreover, the denoising diffusion model is more effective with high-dimensional data, leading to significant savings in computational resources.

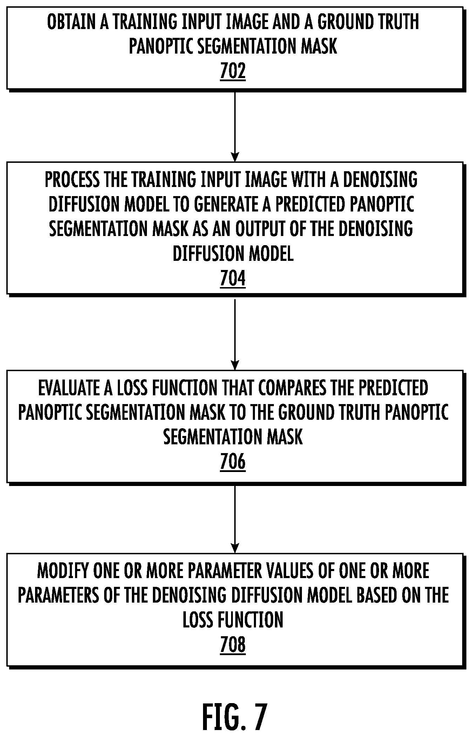

Referring to Figure 7, a flow chart diagram illustrates an example method to train a denoising diffusion model to perform panoptic segmentation according to example embodiments of the present disclosure.

Step 702 involves obtaining, by a computing system, a training input image and a ground truth panoptic segmentation mask. In some implementations, in step 702, the computing system, which may be a server or a cluster of servers, fetches the training data from a data storage system, which could be a local or distributed storage system or a cloud-based storage service. The training input image can include pixel data in various formats, such as raster format, vector format, or a combination thereof. The ground truth panoptic segmentation mask, which may be manually annotated or obtained through other reliable sources, provides the correct semantic and instance labels for each pixel in the image.

In step 704, the computing system processes the training input image with the denoising diffusion model to generate a predicted panoptic segmentation mask as an output of the denoising diffusion model. In some implementations, the denoising diffusion model is a generative model designed to predict the panoptic segmentation mask. The model could include various machine learning algorithms, such as a deep neural network, convolutional neural network, and/or a transformer network, that are optimized for image processing tasks.

Following this, step 706 involves evaluating, by the computing system, a loss function that compares the predicted panoptic segmentation mask to the ground truth panoptic segmentation mask. In some implementations, the loss function measures the difference between the predicted panoptic segmentation mask and the ground truth panoptic segmentation mask. As examples, the loss function could be a mean squared error loss function, cross-entropy loss function, or any other suitable loss function used in machine learning tasks. The goal during the training process is to minimize this loss function, leading to more accurate predictions from the denoising diffusion model.

Lastly, step 708 involves modifying, by the computing system, one or more parameter values of one or more parameters of the denoising diffusion model based on the loss function. The parameters of the denoising diffusion model are adjusted to reduce the loss function, improving the accuracy of the denoising diffusion model's predictions. In some implementations, this adjustment could be performed using various optimization algorithms, such as stochastic gradient descent (SGD), Adam, RMSProp, or other suitable optimization algorithms. This iterative process continues until the denoising diffusion model is sufficiently trained to perform accurate panoptic segmentation, which could be determined based on a predefined performance metric, such as accuracy or F1 score, reaching a predefined threshold and/or based on other stopping criteria.

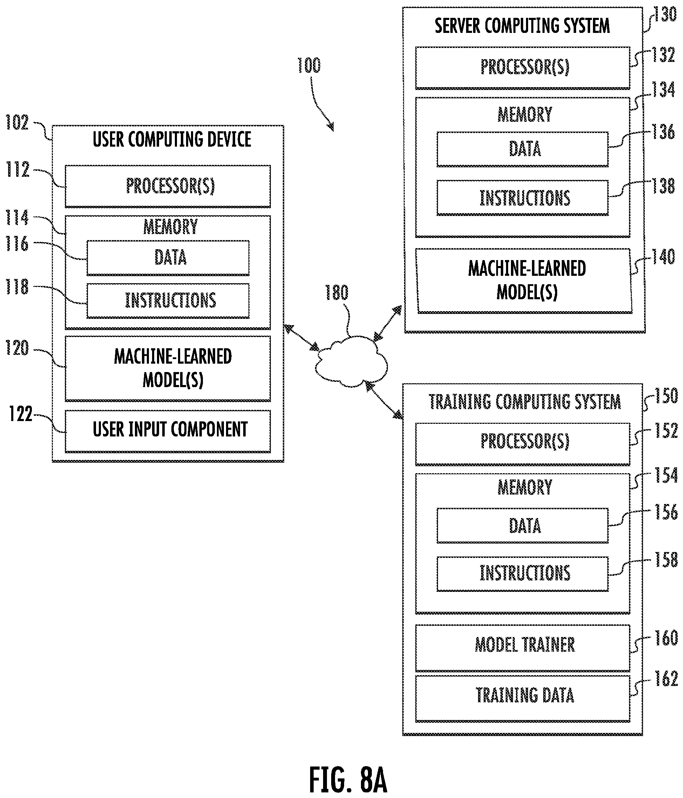

Figure 8A depicts a block diagram of an example computing system 100 according to example embodiments of the present disclosure. The system 100 includes a user computing device 102, a server computing system 130, and a training computing system 150 that are communicatively coupled over a network 180.

The user computing device 102 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 102 includes one or more processors 112 and a memory 114. The one or more processors 112 can be any suitable processing device (e.g., a processor core, a microprocessor, an ASIC, an FPGA, a controller, a microcontroller, etc.) and can be one processor or a plurality of processors that are operatively connected. The memory 114 can include one or more non-transitory computer-readable storage media, such as RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

In some implementations, the user computing device 102 can store or include one or more machine-learned models 120. For example, the machine-learned models 120 can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models). Example machine-learned models 120 are discussed with reference to Figures 1-7.

In some implementations, the one or more machine-learned models 120 can be received from the server computing system 130 over network 180, stored in the user computing device memory 114, and then used or otherwise implemented by the one or more processors 112. In some implementations, the user computing device 102 can implement multiple parallel instances of a single machine-learned model 120 (e.g., to perform parallel segmentation across multiple different images).

Additionally or alternatively, one or more machine-learned models 140 can be included in or otherwise stored and implemented by the server computing system 130 that communicates with the user computing device 102 according to a client-server relationship. For example, the machine-learned models 140 can be implemented by the server computing system 140 as a portion of a web service (e.g., a segmentation service). Thus, one or more models 120 can be stored and implemented at the user computing device 102 and/or one or more models 140 can be stored and implemented at the server computing system 130.

The user computing device 102 can also include one or more user input components 122 that receives user input. For example, the user input component 122 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

The server computing system 130 includes one or more processors 132 and a memory 134. The one or more processors 132 can be any suitable processing device (e.g., a processor core, a microprocessor, an ASIC, an FPGA, a controller, a microcontroller, etc.) and can be one processor or a plurality of processors that are operatively connected. The memory 134 can include one or more non-transitory computer-readable storage media, such as RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more

EP 4 588 021 B1

server computing devices. In instances in which the server computing system 130 includes plural server computing devices, such server computing devices can operate according to sequential computing architectures, parallel computing architectures, or some combination thereof.

As described above, the server computing system 130 can store or otherwise include one or more machine-learned models 140. For example, the models 140 can be or can otherwise include various machine-learned models. Example machine-learned models include neural networks or other multi-layer non-linear models. Example neural networks include feed forward neural networks, deep neural networks, recurrent neural networks, and convolutional neural networks. Some example machine-learned models can leverage an attention mechanism such as self-attention. For example, some example machine-learned models can include multi-headed self-attention models (e.g., transformer models). Example models 140 are discussed with reference to Figures 1-7.

The user computing device 102 and/or the server computing system 130 can train the models 120 and/or 140 via interaction with the training computing system 150 that is communicatively coupled over the network 180. The training computing system 150 can be separate from the server computing system 130 or can be a portion of the server computing system 130.

The training computing system 150 includes one or more processors 152 and a memory 154. The one or more processors 152 can be any suitable processing device (e.g., a processor core, a microprocessor, an ASIC, an FPGA, a controller, a microcontroller, etc.) and can be one processor or a plurality of processors that are operatively connected. The memory 154 can include one or more non-transitory computer-readable storage media, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 120 and/or 140 stored at the user computing device 102 and/or the server computing system 130 using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer 160 can perform a number of generalization techniques (e.g., weight decays, dropouts, etc.) to improve the generalization capability of the models being trained.

In particular, the model trainer 160 can train the machine-learned models 120 and/or 140 based on a set of training data 162. The training data 162 can include, for example, training pairs that can include a training image and a ground truth segmentation mask.

In some implementations, if the user has provided consent, the training examples can be provided by the user computing device 102. Thus, in such implementations, the model 120 provided to the user computing device 102 can be trained by the training computing system 150 on user-specific data received from the user computing device 102. In some instances, this process can be referred to as personalizing the model.

The model trainer 160 includes computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM, hard disk, or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

Figure 8A illustrates one example computing system that can be used to implement the present disclosure. Other computing systems can be used as well. For example, in some implementations, the user computing device 102 can include the model trainer 160 and the training dataset 162. In such implementations, the models 120 can be both trained and used locally at the user computing device 102. In some of such implementations, the user computing device 102 can implement the model trainer 160 to personalize the models 120 based on user-specific data.

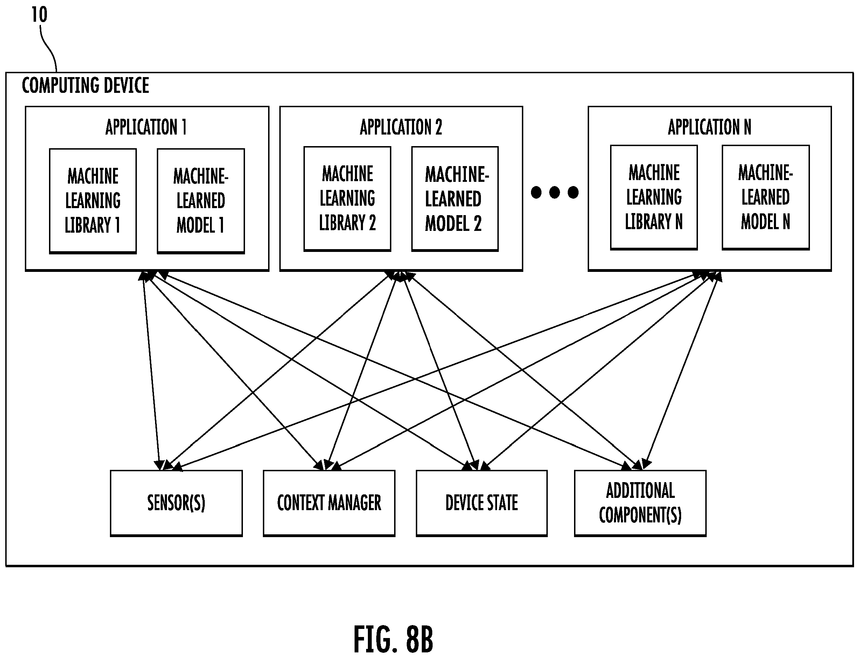

Figure 8B depicts a block diagram of an example computing device 10 that performs according to example embodiments of the present disclosure. The computing device 10 can be a user computing device or a server computing device.

The computing device 10 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 8B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

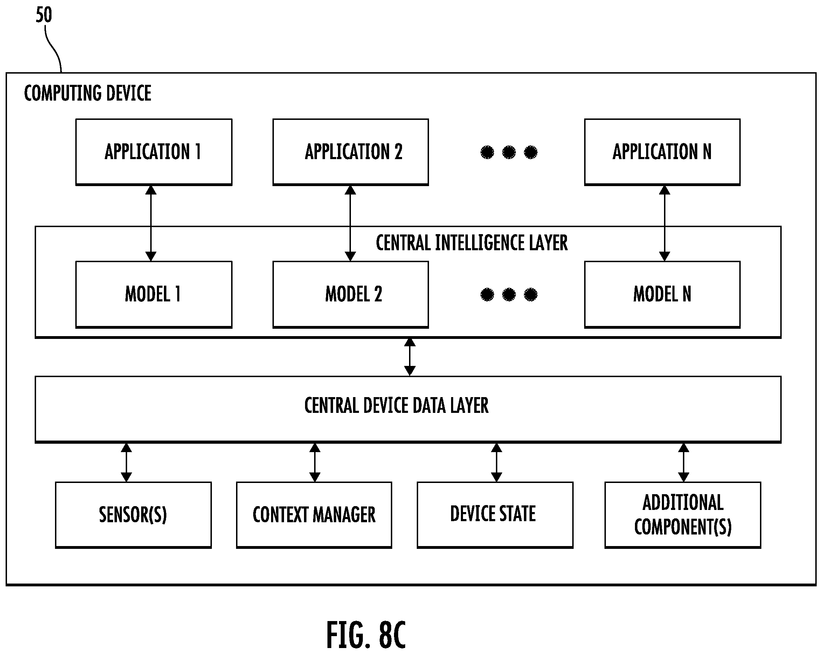

Figure 8C depicts a block diagram of an example computing device 50 that performs according to example embodiments of the present disclosure. The computing device 50 can be a user computing device or a server computing device.

The computing device 50 includes a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer includes a number of machine-learned models. For example, as illustrated in Figure 8C, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of the computing device 50.

The central intelligence layer can communicate with a central device data layer. The central device data layer can be a centralized repository of data for the computing device 50. As illustrated in Figure 8C, the central device data layer can communicate with a number of other components of the computing device, such as, for example, one or more sensors, a context manager, a device state component, and/or additional components. In some implementations, the central device data layer can communicate with each device component using an API (e.g., a private API).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents, within the scope of the appended claims.

**Claims**

1. A computer-implemented method for performing panoptic segmentation, the method comprising:

   obtaining, by a computing system comprising one or more computing devices, an input image comprising a plurality of pixels;
   processing, by the computing system, the input image with a denoising diffusion model to generate a panoptic segmentation mask as an output of the denoising diffusion model, wherein the panoptic segmentation mask provides a respective semantic identifier and a respective instance identifier for each of the plurality of pixels, wherein processing, by the computing system, the input image with the denoising diffusion model to generate the panoptic segmentation mask as the output of the denoising diffusion model comprises:

      encoding, by the computing system, the input image;
      performing, by the computing system, continuous diffusion on the encoded input image to obtain a prediction for the panoptic segmentation mask; and

obtaining, by the computing system, one or more discrete tokens from the prediction for the panoptic segmentation mask; and

providing, by the computing system, the panoptic segmentation mask as an output.

2. The computer-implemented method of claim 1, wherein the denoising diffusion model comprises an image encoder and a mask decoder, wherein the image encoder maps the input image into a feature map, and wherein the mask decoder generates the panoptic segmentation mask from a noised mask conditioned on the feature map.

3. The computer-implemented method of claim 2, wherein the image encoder comprises a residual neural network followed by one or more transformer encoder layers.

4. The computer-implemented method of claim 2 or 3, wherein the image encoder comprises convolutions with bilateral connections and upsampling operations to merge features from different resolutions.

5. The computer-implemented method of any of claims 2-4, wherein the mask decoder comprises one or more transformer layers on a top of a U-net and cross-attention layers to incorporate image features from the feature map.

6. The computer-implemented method of any preceding claim, wherein processing, by the computing system, the input image with the denoising diffusion model to generate the panoptic segmentation mask as the output of the denoising diffusion model comprises:
quantizing, by the computing system, the prediction to obtain the one or more discrete tokens.

7. The computer-implemented method of claim 6, comprising:
scaling, by the computing system, a range of the prediction from the continuous diffusion according to a scaling factor, and wherein the scaling factor equals 0.1.

8. The computer-implemented method of any preceding claim, wherein the denoising diffusion model has been trained using a softmax cross entropy loss applied over logits of the denoising diffusion model.

9. The computer-implemented method of any preceding claim, wherein the denoising diffusion model has been trained using a weighted loss function that assigns a larger weight to mask tokens that have fewer instances.

10. The computer-implemented method of any preceding claim, wherein:

the input image comprises an input image frame from a video; and
processing, by the computing system, the input image with the denoising diffusion model comprises processing, by the computing system with the denoising diffusion model, the input image and one or more preceding panoptic segmentation masks generated for one or more preceding image frames that precede the input image frame in the video.

11. The computer-implemented method of claim 10, wherein the one or more preceding panoptic segmentation masks generated for the one or more preceding image frames comprise a plurality of preceding panoptic segmentation masks generated for a plurality of preceding image frames.

12. The computer-implemented method of claim 10 or claim 11, wherein:
the denoising diffusion model comprises an image encoder and a mask decoder, wherein the image encoder maps the input image frame into a feature map, and wherein the mask decoder generates the panoptic segmentation mask from a noised mask conditioned on the feature map and the one or more preceding panoptic segmentation masks.

13. The computer-implemented method of any of the preceding claims, comprising:

evaluating, by the computing system, a loss function that compares the panoptic segmentation mask to a ground truth panoptic segmentation mask; and
modifying, by the computing system, one or more parameter values of or more parameters of the denoising diffusion model based on the loss function.

14. One or more non-transitory computer-readable media that collectively store instructions for performing panoptic segmentation, wherein execution of the instructions by a suitable computing system causes the computing system to perform operations, the operations comprising:
the method of any of the preceding claims.

15. A computing system for training a denoising diffusion model to perform panoptic segmentation, the computing system comprising one or more processors and one or more non-transitory computer-readable media storing instructions for performing operations, the operations comprising:
the method of any of claims 1 to 13.

**Patentansprüche**

1. Computerimplementiertes Verfahren zum Durchführen von panoptischer Segmentierung, wobei das Verfahren umfasst:

    Erhalten, durch ein Rechensystem, das eine oder mehrere Rechenvorrichtungen umfasst, eines Eingabebildes, das eine Vielzahl von Pixeln umfasst;
    Verarbeiten, durch das Rechensystem, des Eingabebildes mit einem Entrauschungsdiffusionsmodell, um eine panoptische Segmentierungsmaske als eine Ausgabe des Entrauschungsdiffusionsmodells zu erzeugen, wobei die panoptische Segmentierungsmaske einen jeweiligen semantischen Bezeichner und einen jeweiligen Instanzbezeichner für jedes der Vielzahl von Pixeln bereitstellt, wobei Verarbeiten, durch das Rechensystem, des Eingabebildes mit dem Entrauschungsdiffusionsmodell, um die panoptische Segmentierungsmaske als die Ausgabe des Entrauschungsdiffusionsmodells zu erzeugen, umfasst:

    Codieren, durch das Rechensystem, des Eingabebildes;
    Durchführen, durch das Rechensystem, von kontinuierlicher Diffusion an dem codierten Eingabebild, um eine Vorhersage für die panoptische Segmentierungsmaske zu erhalten; und
    Erhalten, durch das Rechensystem, eines oder mehrerer diskreter Token aus der Vorhersage für die panoptische Segmentierungsmaske; und
    Bereitstellen, durch das Rechensystem, der panoptischen Segmentierungsmaske als eine Ausgabe.

2. Computerimplementiertes Verfahren nach Anspruch 1, wobei das Entrauschungsdiffusionsmodell einen Bild-Encoder und einen Masken-Decoder umfasst, wobei der Bild-Encoder das Eingabebild auf eine Merkmalskarte abbildet, und wobei der Masken-Decoder die panoptische Segmentierungsmaske aus einer verrauschten Maske, konditioniert auf die Merkmalskarte, erzeugt.

3. Computerimplementiertes Verfahren nach Anspruch 2, wobei der Bild-Encoder ein residuales neuronales Netzwerk gefolgt von einer oder mehreren Transformer-Encoderschichten umfasst.

4. Computerimplementiertes Verfahren nach Anspruch 2 oder 3, wobei der Bild-Encoder Faltungen mit bilateralen Verbindungen und Upsampling-Operationen umfasst, um Merkmale aus verschiedenen Auflösungen zusammenzuführen.

5. Computerimplementiertes Verfahren nach einem der Ansprüche 2-4, wobei der Masken-Decoder eine oder mehrere Transformer-Schichten auf einer Oberseite eines U-Net und Cross-Attention-Schichten umfasst, um Bildmerkmale aus der Merkmalskarte einzubeziehen.

6. Computerimplementiertes Verfahren nach einem der vorhergehenden Ansprüche, wobei Verarbeiten, durch das Rechensystem, des Eingabebildes mit dem Entrauschungsdiffusionsmodell, um die panoptische Segmentierungsmaske als die Ausgabe des Entrauschungsdiffusionsmodells zu erzeugen, umfasst:
Quantisieren, durch das Rechensystem, der Vorhersage, um das eine oder die mehreren diskreten Token zu erhalten.

7. Computerimplementiertes Verfahren nach Anspruch 6, umfassend: Skalieren, durch das Rechensystem, eines Bereichs der Vorhersage aus der kontinuierlichen Diffusion gemäß einem Skalierungsfaktor, und wobei der Skalierungsfaktor gleich 0,1 ist.

8. Computerimplementiertes Verfahren nach einem der vorhergehenden Ansprüche, wobei das Entrauschungsdiffusionsmodell unter Verwendung eines Softmax-Kreuzentropieverlusts, angewendet über Logits des Entrauschungsdiffusionsmodells, trainiert worden ist.

9. Computerimplementiertes Verfahren nach einem der vorhergehenden Ansprüche, wobei das Entrauschungsdiffusionsmodell unter Verwendung einer gewichteten Verlustfunktion trainiert worden ist, die ein größeres Gewicht Masken-Token zuweist, die weniger Instanzen aufweisen.

10. Computerimplementiertes Verfahren nach einem der vorhergehenden Ansprüche, wobei:

   das Eingabebild einen Eingabebild-Frame aus einem Video umfasst; und
   Verarbeiten, durch das Rechensystem, des Eingabebildes mit dem Entrauschungsdiffusionsmodell Verarbeiten, durch das Rechensystem mit dem Entrauschungsdiffusionsmodell, des Eingabebildes und einer oder mehrerer vorhergehender panoptischer Segmentierungsmasken, die für einen oder mehrere vorhergehende Bild-Frames erzeugt wurden, die dem Eingabebild-Frame in dem Video vorausgehen, umfasst.

11. Computerimplementiertes Verfahren nach Anspruch 10, wobei die eine oder die mehreren vorhergehenden panoptischen Segmentierungsmasken, die für den einen oder die mehreren vorhergehenden Bild-Frames erzeugt wurden, eine Vielzahl von vorhergehenden panoptischen Segmentierungsmasken umfassen, die für eine Vielzahl von vorhergehenden Bild-Frames erzeugt wurden.

12. Computerimplementiertes Verfahren nach Anspruch 10 oder Anspruch 11, wobei:
   das Entrauschungsdiffusionsmodell einen Bild-Encoder und einen Masken-Decoder umfasst, wobei der Bild-Encoder den Eingabebild-Frame auf eine Merkmalskarte abbildet, und wobei der Masken-Decoder die panoptische Segmentierungsmaske aus einer verrauschten Maske, konditioniert auf die Merkmalskarte und die eine oder die mehreren vorhergehenden panoptischen Segmentierungsmasken, erzeugt.

13. Computerimplementiertes Verfahren nach einem der vorhergehenden Ansprüche, umfassend:

   Auswerten, durch das Rechensystem, einer Verlustfunktion, die die panoptische Segmentierungsmaske mit einer panoptischen Ground-Truth-Segmentierungsmaske vergleicht; und
   Modifizieren, durch das Rechensystem, eines oder mehrerer Parameterwerte von oder mehrerer Parameter des Entrauschungsdiffusionsmodells basierend auf der Verlustfunktion.

14. Ein oder mehrere nichttransitorische computerlesbare Medien, die gemeinsam Anweisungen zum Durchführen von panoptischer Segmentierung speichern, wobei Ausführung der Anweisungen durch ein geeignetes Rechensystem das Rechensystem veranlasst, Operationen durchzuführen, wobei die Operationen umfassen:
   das Verfahren nach einem der vorhergehenden Ansprüche.

15. Rechensystem zum Trainieren eines Entrauschungsdiffusionsmodells zum Durchführen von panoptischer Segmentierung, wobei das Rechensystem einen oder mehrere Prozessoren und ein oder mehrere nichttransitorische computerlesbare Medien umfasst, die Anweisungen zum Durchführen von Operationen speichern, wobei die Operationen umfassen:
   das Verfahren nach einem der Ansprüche 1 bis 13.


**Revendications**

1. Procédé mis en œuvre par ordinateur de réalisation de segmentation panoptique, le procédé comprenant :

   l'obtention, par un système informatique comprenant un ou plusieurs dispositifs informatiques, d'une image d'entrée comprenant une pluralité de pixels ;
   le traitement, par le système informatique, de l'image d'entrée avec un modèle de diffusion de débruitage pour générer un masque de segmentation panoptique comme sortie du modèle de diffusion de débruitage, dans lequel le masque de segmentation panoptique fournit un identifiant sémantique et un identifiant d'instance respectifs pour chacun de la pluralité des pixels, dans lequel le traitement, par le système informatique, de l'image d'entrée avec le modèle de diffusion de débruitage pour générer le masque de segmentation panoptique comme sortie du modèle de diffusion de débruitage comprend :

l'encodage, par le système informatique, de l'image d'entrée ; la réalisation, par le système informatique, d'une diffusion continue sur l'image d'entrée encodée afin d'obtenir une prédiction pour le masque de segmentation panoptique ; et

l'obtention, par le système informatique, d'un ou plusieurs jetons discrets à partir de la prédiction pour le masque de segmentation panoptique ; et

la mise à disposition, par le système informatique, du masque de segmentation panoptique comme sortie.

2. Procédé mis en œuvre par ordinateur selon la revendication 1, dans lequel le modèle de diffusion de débruitage comprend un encodeur d'image et un décodeur de masque, dans lequel l'encodeur d'image transforme l'image d'entrée en une carte de caractéristiques, et dans lequel le décodeur de masque génère le masque de segmentation panoptique à partir d'un masque bruité conditionné par la carte de caractéristiques.

3. Procédé mis en œuvre par ordinateur selon la revendication 2, dans lequel l'encodeur d'image comprend un réseau neuronal résiduel suivi d'une ou plusieurs couches d'encodeur de transformateur.

4. Procédé mis en œuvre par ordinateur selon la revendication 2 ou 3, dans lequel l'encodeur d'images comprend des convolutions avec des connexions bilatérales et des opérations de suréchantillonnage pour fusionner des caractéristiques de résolutions différentes.

5. Procédé mis en œuvre par ordinateur selon l'une quelconque des revendications 2 à 4, dans lequel le décodeur de masque comprend une ou plusieurs couches de transformateur au-dessus d'un U-net et des couches d'attention croisée pour incorporer des caractéristiques d'image provenant de la carte de caractéristiques.

6. Procédé mis en œuvre par ordinateur selon une quelconque revendication précédente, dans lequel le traitement, par le système informatique, de l'image d'entrée avec le modèle de diffusion de débruitage pour générer le masque de segmentation panoptique comme sortie du modèle de diffusion de débruitage comprend :
la quantification, par le système informatique, de la prédiction pour obtenir les un ou plusieurs jetons discrets.

7. Procédé mis en œuvre par ordinateur selon la revendication 6, comprenant : la mise à l'échelle, par le système informatique, d'une plage de prédiction de la diffusion continue selon un facteur d'échelle, et dans lequel le facteur d'échelle est égal à 0,1.

8. Procédé mis en œuvre par ordinateur selon une quelconque revendication précédente, dans lequel le modèle de diffusion de débruitage a été entraîné à l'aide d'une perte d'entropie croisée softmax appliquée sur les logits du modèle de diffusion de débruitage.

9. Procédé mis en œuvre par ordinateur selon une quelconque revendication précédente, dans lequel le modèle de diffusion de débruitage a été entraîné à l'aide d'une fonction de perte pondérée qui attribue une pondération plus importante aux jetons de masque qui ont moins d'instances.

10. Procédé mis en œuvre par ordinateur selon une quelconque revendication précédente, dans lequel :

l'image d'entrée comprend une trame d'image d'entrée provenant d'une vidéo ; et

le traitement, par le système informatique, de l'image d'entrée avec le modèle de diffusion de débruitage comprend le traitement, par le système informatique avec le modèle de diffusion de débruitage, de l'image d'entrée et d'un ou plusieurs masques de segmentation panoptique précédents générés pour une ou plusieurs trames d'images précédentes qui précèdent la trame d'image d'entrée dans la vidéo.

11. Procédé mis en œuvre par ordinateur selon la revendication 10, dans lequel les un ou plusieurs masques de segmentation panoptique précédents générés pour les unes ou plusieurs trames d'images précédentes comprennent une pluralité de masques de segmentation panoptique précédents générés pour une pluralité de trames d'images précédentes.

12. Procédé mis en œuvre par ordinateur selon la revendication 10 ou la revendication 11, dans lequel :
le modèle de diffusion de débruitage comprend un encodeur d'image et un décodeur de masque, dans lequel l'encodeur d'image transforme la trame d'image d'entrée en une carte de caractéristiques, et dans lequel le décodeur de masque génère le masque de segmentation panoptique à partir d'un masque bruité conditionné par la carte de caractéristiques et les un ou plusieurs masques de segmentation panoptique précédents.

**13.** Procédé mis en œuvre par ordinateur selon l'une quelconque des revendications précédentes, comprenant :

l'évaluation, par le système informatique, d'une fonction de perte qui compare le masque de segmentation panoptique à un masque de segmentation panoptique de vérité terrain ; et
la modification, par le système informatique, d'une ou plusieurs valeurs de paramètre d'un ou plusieurs paramètres du modèle de diffusion de débruitage sur la base de la fonction de perte.

**14.** Un ou plusieurs supports non transitoires lisibles par ordinateur qui stockent collectivement des instructions de réalisation de segmentation panoptique, dans lequel l'exécution des instructions par un système informatique approprié amène le système informatique à réaliser des opérations, les opérations comprenant :
le procédé selon l'une quelconque des revendications précédentes.

**15.** Système informatique pour l'entraînement d'un modèle de diffusion de débruitage pour réaliser une segmentation panoptique, le système informatique comprenant un ou plusieurs processeurs et un ou plusieurs supports non transitoires lisibles par ordinateur stockant des instructions pour réaliser des opérations, les opérations comprenant :
le procédé selon l'une quelconque des revendications 1 à 13.

**FIG. 1**

EP 4 588 021 B1

IMAGE ENCODER

MASK DECODER

CROSS ATTENTION

CHANNEL-WISE CONCATENATION

HIDDEN FEATURES

NOISED MASK

IMAGE

MASK

×STEPS

204

206

208

210

12

16

200

# FIG. 2

FIG. 3

FIG. 4

TRAINING INPUT IMAGE
512

14

DENOISING
DIFFUSION MODEL

PREDICTED PANOPTIC
SEGMENTATION MASK
516

GROUND TRUTH PANOPTIC
SEGMENTATION MASK
518

LOSS FUNCTION
520

FIG. 5

```
┌─────────────────────────────────────────────────────────────┐
│   OBTAIN AN INPUT IMAGE COMPRISING A PLURALITY OF PIXELS       │
│                          602                                   │
└─────────────────────────────────────────────────────────────┘
                              │
                              ▼
┌─────────────────────────────────────────────────────────────┐
│  PROCESS THE INPUT IMAGE WITH A DENOISING DIFFUSION MODEL      │
│  TO GENERATE A PANOPTIC SEGMENTATION MASK THAT PROVIDES A      │
│  RESPECTIVE SEMANTIC IDENTIFIER AND A RESPECTIVE INSTANCE      │
│    IDENTIFIER FOR EACH OF THE PLURALITY OF PIXELS              │
│                          604                                   │
└─────────────────────────────────────────────────────────────┘
                              │
                              ▼
┌─────────────────────────────────────────────────────────────┐
│    PROVIDE THE PANOPTIC SEGMENTATION MASK AS AN OUTPUT         │
│                          606                                   │
└─────────────────────────────────────────────────────────────┘
```

# FIG. 6

OBTAIN A TRAINING INPUT IMAGE AND A GROUND TRUTH
PANOPTIC SEGMENTATION MASK
702

PROCESS THE TRAINING INPUT IMAGE WITH A DENOISING
DIFFUSION MODEL TO GENERATE A PREDICTED PANOPTIC
SEGMENTATION MASK AS AN OUTPUT OF THE DENOISING
DIFFUSION MODEL
704

EVALUATE A LOSS FUNCTION THAT COMPARES THE PREDICTED
PANOPTIC SEGMENTATION MASK TO THE GROUND TRUTH PANOPTIC
SEGMENTATION MASK
706

MODIFY ONE OR MORE PARAMETER VALUES OF ONE OR MORE
PARAMETERS OF THE DENOISING DIFFUSION MODEL BASED ON THE
LOSS FUNCTION
708

FIG. 7

**FIG. 8A**

FIG. 8B

COMPUTING DEVICE 10

APPLICATION 1
- MACHINE LEARNING LIBRARY 1
- MACHINE-LEARNED MODEL 1

APPLICATION 2
- MACHINE LEARNING LIBRARY 2
- MACHINE-LEARNED MODEL 2

APPLICATION N
- MACHINE LEARNING LIBRARY N
- MACHINE-LEARNED MODEL N

SENSOR(S)

CONTEXT MANAGER

DEVICE STATE

ADDITIONAL COMPONENT(S)

COMPUTING DEVICE

| APPLICATION 1 | APPLICATION 2 | ● ● ● | APPLICATION N |

CENTRAL INTELLIGENCE LAYER

| MODEL 1 | MODEL 2 | ● ● ● | MODEL N |

CENTRAL DEVICE DATA LAYER

| SENSOR(S) | CONTEXT MANAGER | DEVICE STATE | ADDITIONAL COMPONENT(S) |

50

FIG. 8C

EP 4 588 021 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63415619

**Non-patent literature cited in the description**

- Denoising Pretraining for Semantic Segmentation. **BREMPONG EMMANUEL ASIEDU et al.** 2022 IEEE/CVF CONFERENCE ON COMPUTER VISION AND PATTERN RECOGNITION WORKSHOPS (CVPRW). IEEE, 19 June 2022, 4174-4185

- MaX-DeepLab: End-to-End Panoptic Segmentation with Mask Transformers. **WANG HUIYU et al.** 2021 IEEE/CVF CONFERENCE ON COMPUTER VISION AND PATTERN RECOGNITION (CVPR). IEEE, 20 June 2021, 5459-5470